(19)

**Europäisches Patentamt**
**European Patent Office**
**Office européen des brevets**

(11) **EP 4 385 790 A1**

(12) **EUROPÄISCHE PATENTANMELDUNG**

(43) Veröffentlichungstag:
    **19.06.2024 Patentblatt 2024/25**

(21) Anmeldenummer: **22212840.7**

(22) Anmeldetag: **12.12.2022**

(51) Internationale Patentklassifikation (IPC):
**B60L 3/12** *(2006.01)*  **B60L 7/22** *(2006.01)*
**B60L 15/38** *(2006.01)*  **B60L 58/13** *(2019.01)*
**B60L 7/24** *(2006.01)*  **B60L 3/10** *(2006.01)*
**B60L 15/20** *(2006.01)*  **B60T 8/176** *(2006.01)*

(52) Gemeinsame Patentklassifikation (CPC):
**B60L 15/38; B60L 3/102; B60L 3/108; B60L 3/12;**
**B60L 7/22; B60L 7/24; B60L 15/2009; B60L 58/13;**
**B60T 8/176;** B60L 2210/30; B60L 2210/40;
B60L 2220/44; B60L 2240/14; B60L 2240/24;
B60L 2240/26;                                    (Forts.)

(84) Benannte Vertragsstaaten:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Benannte Erstreckungsstaaten:
**BA**
Benannte Validierungsstaaten:
**KH MA MD TN**

(71) Anmelder:
• **Technische Universität Ilmenau**
  **98693 Ilmenau (DE)**
• **Elaphe Propulsion Technologies Ltd.**
  **1000 Ljubljana (SI)**
• **Brembo S.p.A.**
  **24040 Bergamo (IT)**

(72) Erfinder:
• **Buh, Joze**
  **1000 Ljubljana (SI)**

• **Lampic, Gorazd**
  **1000 Ljubljana (SI)**
• **Bertagna, Alessandro**
  **20131 Mailand (IT)**
• **Rossi, Alessandro**
  **24128 Bergamo (IT)**
• **Mazzoni, Matteo**
  **20044 Mailand (IT)**
• **Heydrich, Marius**
  **98693 Ilmenau (DE)**
• **Ivanov, Valentin**
  **99085 Erfurt (DE)**

(74) Vertreter: **Donath, Dirk**
**Patent- und Rechtsanwaltskanzlei**
**Bock Bieber Donath Partnerschaftsgesellschaft**
**Humboldtstraße 18**
**07743 Jena (DE)**

(54) **ANORDNUNG UND VERFAHREN ZUR KONTINUIERLICHEN RADMOMENTREGELUNG IN BATTERIEELEKTRISCHEN FAHRZEUGEN MIT RADNABENMASCHINEN UND ENTKOPPELTEN BREMSSYSTEM**

(57)    Die Erfindung betrifft eine Anordnung und ein Verfahren zur kontinuierlichen Radmomentregelung in batterieelektrischen Fahrzeugen mit Radnabenmaschinen und entkoppeltem Bremssystem.

Die Aufgabe der Erfindung, eine Anordnung und ein Verfahren zur kontinuierlichen Radmomentregelung in batterieelektrischen Fahrzeugen mit Radnabenmaschinen und entkoppeltem Bremssystem anzugeben, welche eine Bremsmomentverteilung (Bremsmomentverblendung) eines Radnabenantriebs in Kombination mit einem entkoppelten Bremssystem ermöglicht, wird dadurch gelöst, dass eine zentrale Fahrzeug-Steuergeräteinheit, ein entkoppeltes Bremssystem, eine Vorrichtung an dem Bremspedal, eine Traktionsbatterie, elektrische Maschinen die ein Antriebsmoment oder ein Bremsmoment erzeugen und elektrische Energie zurückgewinnen, Leistungselektronikmodule, reale und virtuelle Sensoren umfasst, wobei ein integriertes Momentregelsystem vorgesehen ist, dass über eine Steuer- und Regeleinheit zur Generierung eines Gesamtantriebsmoments und eines Gesamtbremsmoments in Abhängigkeit des Fahrerwunsches, eine Steuer- und Regeleinheit zur Generierung des optimalen Radschlupfs und Momentanpassung für jedes Rad und eine Steuer- und Regeleinheit zur Momentverblendung und - Verteilung, welche die Gesamtmomentanfrage für jedes Rad und die zugehörigen Stellsignale für die elektrischen Maschinen und Bremssättel generiert, vorgesehen ist und daten- sowie informationsleitend mit der zentralen Fahrzeug-Steuergeräteinheit verbunden ist, wobei das Momentregelsystem mit zwei Modulen zur Beschränkung der Aktuatoren und einem Modul zur Beschränkung der Traktionsbatterie, daten-

**(Forts. nächste Seite)**

EP 4 385 790 A1

und informationsleitend verbunden ist und das Radmoment regelt wobei das an jedem Rad anliegende Drehmoment durch das Momentregelsystem mit implementierter Referenzschlupfschätzung auf Basis von Fahrereingaben, einem ausgewählten Fahrmodus und äußeren, von den Sensoren erfassten Einflüssen hinsichtlich des optimalen Radschlupfverhältnisses limitiert wird.

(52) Gemeinsame Patentklassifikation (CPC): (Forts.)
B60L 2240/421; B60L 2240/425; B60L 2240/461;
B60L 2240/463; B60L 2240/465; B60L 2240/545;
B60L 2240/549; B60L 2240/642; B60L 2250/26;
B60T 2270/604

**Beschreibung**

Die Erfindung betrifft eine Anordnung und ein Verfahren zur kontinuierlichen Radmomentregelung in batterieelektrischen Fahrzeugen mit Radnabenmaschinen (Elektromaschinen) für regeneratives Bremsen mittels dieser Elektromaschinen und einem entkoppelten Bremssystem für Reibungsbremsen zum kooperativen Bremsen, insbesondere zur unabhängigen Regelung und Verteilung (auch Verblendung genannt) des Raddrehmomentes in einem batterieelektrischen Fahrzeug, welches mit Radnabenmaschinen an mindestens einer angetriebenen Achse und einem entkoppelten Bremssystem, welches über unabhängig voneinander operierenden Aktuatoren an der Vorder- und Hinterachse verfügt, ausgestattet ist.

Derzeit ist die radindividuelle Drehmomentregelung in modernen Fahrzeugen ein häufig verwendeter Bestandteil verschiedener Regelsysteme wie dem Antiblockiersystem (ABS), der Traktionskontrolle (engl. *Traction Control,* TC) und der elektronischen Stabilitätskontrolle (engl. *Electronic Stability Control,* ESC). Mit diesen Funktionen kann die Fahrsicherheit deutlich erhöht werden.

Die genannten Systeme verfügen über eine Radschlupfregelung (eng. *Wheel Slip Control,* WSC) als Hauptelement.

Die meisten dieser bekannten WSC-Realisierungen verwenden aufgrund ihrer Robustheit und Echtzeitfähigkeit regelbasierte Steuerungsansätze.

Diese Ansätze erfordern jedoch eine komplexe Abstimmung, um ein breites Spektrum von Straßenreibungsbedingungen und Fahrmanövern abzudecken.

Außerdem wird die regelbasierte WSC in der Regel aktiv, wenn der Radschlupfwert einen Schwellenwert überschreitet, und inaktiv, wenn er wieder unter diesem Schwellenwert liegt. Dies führt zu einem unkomfortablen Bremsverhalten durch das hohe Rucken des Fahrzeugaufbaus und auch die Pulsation im Bremspedal, die durch die direkte Kopplung des Pedals mit dem Hydraulikkreis der Reibungsbremsen entsteht.

Durch die Nutzung entkoppelter Bremssystems (engl. *Decoupled Braking* System, DBS), auch Brake-by-Wire genannt, entfällt diese Kopplung im normalen Betriebszustand, sodass die pulsierende Rückmeldung auf das Bremspedal aktiv unterdrückt werden kann.

Ergänzend zu Fahrzeugen mit Verbrennungsmotor (engl. *Internal Combustion Engine,* ICE) oder Hybridelektrofahrzeugen (mit Ausnahme von Plug-in-Hybriden), die nur mit einem Reibungsbremssystem ausgestattet sind, sind batterieelektrischen Fahrzeuge (engl. *Batteryelectric Vehicles,* BEVs) auch in der Lage, ein elektrisches Drehmoment zur Verzögerung zu nutzen. Die Nutzung dieses regenerativen Drehmoments ist sowohl für die Fahrsicherheit während der Bremsmanöver als auch für die Energieeffizienz von Vorteil, da das Fahrzeug in den Generatormodus wechselt, in welchem elektrische Energie zum Aufladen der Antriebsbatterie zurückgewonnen wird. Durch die bessere Modulation des Radmoments kann auch der Fahrkomfort deutlich gesteigert werden. Die parallele Nutzung von regenerativem und Reibbremsmoment wird als Brake Blending bezeichnet.

Mit einem DBS kann die Drehmomentmodulation zwischen Elektromotoren und Reibungsbremsen durch die Steuerungsalgorithmen des Brake Blending leicht umverteilt werden.

Neben der zentralen Antriebsarchitektur, die für Fahrzeuge mit Verbrennungsmotoren und Elektrofahrzeugen (engl. *Electric Vehicles,* EVs), die auf Verbrennungsmotorplattformen basieren, gut etabliert ist, erhalten EVs mit individuell angesteuerten Elektromaschinen im Allgemeinen und Radnabenmaschinen im Besonderen aufgrund ihrer hohen Leistung, Designflexibilität und anderer Faktoren, die den Anforderungen der Elektrifizierung und Automatisierung des Verkehrs entsprechen, immer mehr Aufmerksamkeit von der Automobilindustrie und Forschung.

Die attraktivste, aber auch schwierigste Aufgabe für Elektrofahrzeuge mit Radnabenmaschinen ist eine geeignete Drehmomentverteilung (Drehmomentverblendung) zwischen der Reibungsbremse und dem regenerativen Bremssystem, um Leistung und Effizienz zu verbessern.

In zahlreichen Patenten werden verschiedene Ansätze zur Verteilung des Bremsmoments vorgeschlagen.

So beschreibt US 20150019058 A1 bspw. die Drehmomentverteilung in Abhängigkeit von der Fahrweise, ohne jedoch auf die Verwendung der Schlupfregelung einzugehen.

DE 10 2011 016 246 A1 und US 9 527 484 B2 offenbaren bspw. Methoden zur Maximierung des regenerativen Drehmoments beim Bremsen. Da dies zum Blockieren der Räder führen kann, muss das regenerative Bremsen durch das Antiblockiersystem begrenzt werden, um die Fahrzeugstabilität zu erhöhen und eine gleichmäßige Radschlupfeinstellung und homogene Drehmomentmodulation zu gewährleisten.

Eine andere, in JP 2004104991 A beschriebene Regelungsstrategie verwendet die Mischung zwischen dem Reibungsbremsmoment und dem regenerativen Drehmoment der zentralen, elektrischen Maschine in Abhängigkeit von verschiedenen, vorab festgelegten Schwellwerten für den Radschlupf und umfasst auch die Funktionalität der Fahrzeugstabilitätsregelung auf der Grundlage der Schwellwerte für den maximalen Schwimmwinkel und die Gierrate.

US 9 744 862 B2 beschreibt ein System, das die Erzeugung und Verteilung des angeforderten Bremsmoments zusammen mit der WSC ermöglicht. Dabei ist jedoch nicht spezifiziert, wie die Drehmomentanforderung begrenzt werden kann, um ein Blockieren der Räder zu verhindern.

DE 10 2014 003 992 A1 offenbart die radindividuelle Drehmomentregelung für ein batterieelektrisches Fahrzeug mit elektrischen Maschinen, Getriebe und Übertragungselementen zwischen Getriebe und Rad sowie einem elektrohydraulischen Brake-by-Wire-System vorgestellt.

Diese Drehmomentenzuweisung verfügt über eine Antiblockierregelung, die auf dem Mischbetrieb von Reibbremse und regenerativem Drehmoment basiert. Dabei kann das System mit kontinuierlichen Regelverfahren wie PID realisiert werden.

Eine Variante der kooperativen Bremssteuerung mit Elektromotoren und dem Bremssystem für BEV wird in EP2760714 B1 vorgeschlagen, bei der der Zustands schätzer erforderlich ist, um ein aktuelles Bremsmoment des Fahrzeugs zusammen mit der aktuellen Radgeschwindigkeit und dem aktuellen Schlupf für jedes einzelne Rad zu definieren, was die Berechnung der von den regenerativen Bremssystemen (Elektromaschinen) bereitzustellenden Generatorbremsanforderung ermöglicht.

Eine Variante der regelbasierten Bremsmischung und Bremsmomentsteuerung für ein Fahrzeug mit Zentralmotor ist in US 8 152 245 B2 beschrieben. Das beschriebene Verfahren verteilt den Bremsmomentbedarf unter Berücksichtigung der ausgewählten Räder (Vorder- und Hinterräder sowie angetriebene und nicht angetriebene Räder).

US 9 321 356 B2 offenbart ein Verfahren zur gemischten Bremssteuerung mit einem DBS und regenerativem Bremsen, bei dem die Menge der regenerierten Energie in Abhängigkeit von der Geschwindigkeit des Bremspedals begrenzt werden kann. Dies ermöglicht die Maximierung der Bremswirkung im Falle einer Notbremsung.

Für den vorgenannten Stands der Technik lässt sich zusammenfassen, dass es viele Ansätze für die Regelung von regenerativem und Mischbremsen gibt, darunter auch Lösungen mit dem Einsatz eines entkoppelten Bremssystems.

Der Nachteil all dieser technischen Lehren besteht jedoch darin, dass technische Lösungen zur Bremsmomentenverteilung (Bremsmomentenverblendung) von Radnabenmaschinen in Kombination mit einem entkoppelten Bremssystem fehlen.

Der Erfindung liegt daher die Aufgabe zu Grunde, eine Anordnung und ein Verfahren zur kontinuierlichen Radmomentregelung in batterieelektrischen Fahrzeugen mit Radnabenmaschinen (Elektromaschinen) für regeneratives Bremsen mittels des Elektromaschinen und einem entkoppeltem Bremssystem für Reibungsbremsen zum kooperativen Bremsen anzugeben, welche den zuvor stehend genannten Nachteil des Standes der Technik bei der regelbasierten Mischung beider Bremssysteme vermeiden, insbesondere eine Bremsmomentverteilung (Bremsmomentverblendung) zwischen Radnabenmaschinen (Elektromaschinen) und einem entkoppelten Bremssystem für Reibungsbremsen bei der kooperativen Wirkung beider Bremssysteme ermöglicht.

Erfindungsgemäß wird diese Aufgabe durch die kennzeichnenden Merkmale des 1. und 3. Patentanspruchs gelöst. Weitere günstige Ausgestaltungsmöglichkeiten der Erfindung sind in den nachgeordneten Patentansprüchen angegeben.

Das Wesen der vorliegenden technischen Lösungen zur Bremsmomentverteilung (Bremsmomentverblendung) eines Radnabenantriebs in Kombination mit einem entkoppelten Bremssystem besteht darin, dass eine Anordnung und Verfahren zur kontinuierlichen Radmomentregelung in batterieelektrischen Fahrzeugen mit Radnabenantrieb und entkoppeltem Bremssystem bereitgestellt wird, welche folgende Komponenten umfasst:

- eine zentrale Fahrzeug-Steuergeräteinheit zur Steuerung und Regelung sowie zur Verarbeitung von Daten,
- ein entkoppeltes Bremssystem mit einem Bremspedal und mindestens einem Bremsensteuergerät, welche daten- und informationsleitend miteinander verbunden sind, wobei das Bremssystem einzelne Reibbremsen an jedem Rad des Fahrzeugs in Form von Bremsscheiben sowie Bremssätteln beinhaltet, welche eine Klemmkraft auf die Bremsscheiben ausüben, wenn Sie mittels des Bremspedals und des Bremsensteuergeräts aktuiert werden und wobei das Bremsensteuergerät Aktuatoren an jedem Rad einzeln und das Bremssystem im Ganzen steuert sowie regelt und dabei zur kooperativen Bremssteuerung daten- und informationsleitend mit der Fahrzeug-Steuergeräteinheit verbunden ist,
- eine Vorrichtung an dem Bremspedal zur Simulation eines Pedalgefühls beim Bedienen dessen,
- eine Traktionsbatterie, welche elektrische Energie vorhält,
- elektrische Maschinen mit einem Antriebspedal und mindestens einem Antriebssteuergerät, welche daten- und informationsleitend miteinander verbunden sind, radindividuell angesteuert und ohne Getriebe mit den Rädern als Radnabenantrieb verbunden sind und

  - ein Antriebsmoment erzeugen, wenn sie mit elektrischer Energie aus der Traktionsbatterie versorgt werden oder
  - ein Bremsmoment erzeugen, während sie im Generatormodus betrieben werden und elektrische Energie aus kinetischer Energie zurückgewinnen, um die Traktionsbatterie aufzuladen,

- ein Leistungsmodul (= Leistungselektronik mit zugehörigem Antriebssteuergerät), welches

  - im Antriebsfall den Gleichstrom aus der Traktionsbatterie in Wechselstrom zur Versorgung der elektrischen Maschinen oder

- im Bremsfall den während des regenerativen Bremsens entstehenden Wechselstrom in Gleichstrom zum Laden der Traktionsbatterie umwandelt, um diese zu laden,

• reale Sensoren zur Messung von Fahrzeuglängsbeschleunigung, Radgeschwindigkeiten, Pedalposition, Fahrzeuggierrate, Lenkradwinkel, Ladezustand der Traktionsbatterie, Stromstärke des Lade- bzw. Entladestroms der Traktionsbatterie, Temperatur der Traktionsbatterie, Winkelgeschwindigkeit der elektrischen Maschinen und Temperatur der elektrischen Maschinen, welche mit der zentralen Fahrzeug-Steuergeräteeinheit verbunden sind, sowie

• virtuelle Sensoren, erzeugt durch mindestens einen Algorithmus in der zentralen Fahrzeug- Steuergeräteeinheit zur Detektion von weiteren Signalen bezüglich der Fahrzeuglängsgeschwindigkeit, der Längskräfte an den Reifen, der Vertikalkräfte an den Reifen, der Fahrzeuggesamtmasse und des Fahrbahnsteigungswinkels.

Dabei ist vorgesehen, dass die Anordnung ein integriertes Momentregelsystem umfasst, welches über

- eine Steuer- und Regeleinheit zur Generierung eines Gesamtantriebsmoments und eines Gesamtbremsmoments in Abhängigkeit des Fahrerwunsches,
- eine Steuer- und Regeleinheit zur Generierung des optimalen Radschlupfs und Momentanpassung für jedes Rad und
- eine Steuer- und Regeleinheit zur Momentverteilung (Momentverblendung), welche die Gesamtmomentenanfrage für jedes Rad und die zugehörigen Stellsignale für die elektrischen Maschinen und Bremssättel generiert,

verfügt und daten- sowie informationsleitend mit der zentralen Fahrzeug-Steuergeräteeinheit verbunden ist.
Das Momentregelsystem weist dabei

- ein Modul zur Beschränkung der Aktuatoren, welches, basierend auf den Informationen über die Drehzahl, Motortemperatur, Motorstromstärke und Motorzustand, die oberen und unteren Grenzen für die elektrischen Maschinen bestimmt,
- ein Modul zur Beschränkung der Aktuatoren, welches, basierend auf den Informationen über die maximale Klemmkraft und die maximale Betätigungsgeschwindigkeit, die oberen und unteren Grenzen für die Reibbremsen bestimmt und
- ein Modul zur Beschränkung der Traktionsbatterie, welches, basierend auf Informationen über den Ladezustand, die Lade-/Entladestromstärke, die Batteriespannung und die Batterietemperatur, die oberen und untere Grenzen für die Traktionsbatterie bestimmt,

auf, welche daten- und informationsleitend verbunden sind, wodurch das Radmoment regelbar ist.
Dabei ist vorteilhaft, dass

• das Modul zur Beschränkung der Aktuatoren, welches, basierend auf den Informationen über die Drehzahl, Motortemperatur, Motorstromstärke und Motorzustand, die oberen und unteren Grenzen für die elektrischen Maschinen bestimmt,

• das Modul zur Beschränkung der Aktuatoren, welches, basierend auf den Informationen über die maximale Klemmkraft und die maximale Betätigungsgeschwindigkeit, die oberen und unteren Grenzen für die Reibbremsen bestimmt und

• das Modul zur Beschränkung der Traktionsbatterie, welches, basierend auf Informationen über den Ladezustand, die Lade-/Entladestromstärke, die Batteriespannung und die Batterietemperatur, die oberen und untere Grenzen für die Traktionsbatterie bestimmt,

mittels Algorithmen und basierend auf

- einem gemessenen Pedalweg des Antriebspedals oder des Bremspedals,
- einer gemessenen Längsbeschleunigung des Fahrzeugaufbaus,
- einer gemessenen Fahrzeugmasse und
- einem gemessenen Steigungswinkel

die notwendige Größe des Antriebsmoments oder Bremsmoments ermitteln und an das Momentregelsystem übergeben, welches das Radmoment über die elektrischen Maschinen und das Bremssystem antreibend oder bremsend regelt.

Dabei generiert die Steuer- und Regeleinheit zur Generierung des optimalen Radschlupf mittels

- eines Algorithmus, der das aktuelle Radschlupfverhältnis an jedem Rad bestimmt, basierend auf

  - einem gemessenen Längsgeschwindigkeitssignal jedes Rades, und
  - einer gemessenen Längsgeschwindigkeit des Fahrzeugaufbaus,

- eines Algorithmus, der das Referenzschlupfverhältnis an jedem Rad bestimmt, basierend auf

  - einer gemessenen Längsbeschleunigung des Fahrzeugaufbaus;
  - einer gemessenen Längskraft an jedem Rad, und
  - einer gemessenen Vertikalkraft an jedem Rad,

- eines Algorithmus, der die Differenz zwischen dem aktuellen und dem Referenzschlupfverhältnis für jedes Rad bestimmt, sowie
- eines Algorithmus, der das Raddrehmoment gemäß dem optimalen Radschlupfverhältnis für jedes Rad anpasst, basierend auf

  - einer gemessenen Winkeländerung am Lenkrad, und
  - einer gemessenen Gierrate des Fahrzeugaufbaus

Daten, die an das Momentenregelsystem übergeben werden, welches das Radmoment über die elektrischen Maschinen und das Bremssystem antreibend oder bremsend regelt.

Von Vorteil dabei ist, dass die zentrale Fahrzeug-Steuergeräteeinheit in Abstimmung mit dem Momentenregelsystem Daten mittels

- eines Algorithmus, der den maximalen Anteil des regenerativen Bremsmoments bestimmt, basierend auf

  - einer gemessenen Verschiebung des Bremspedals,
  - Aktuatorbeschränkungen der elektrischen Maschinen und des Bremssystems sowie
  - Beschränkungen der Traktionsbatterie,
    und

- eines Algorithmus, der das gesamte Raddrehmoment in den Anteil an regenerativem Moment für die elektrischen Maschinen und das reine Reibbremsmoment für die Reibbremsen aufteilt,

verarbeitet und mit den verarbeiteten Daten das Radmoment über die elektrischen Maschinen und das Bremssystem bremsend regelt.

Die Erfindung wird nachstehend an Hand der schematischen Zeichnungen und dem Ausführungsbeispiel näher erläutert, ohne auf dieses beschränkt zu werden. Es zeigen:

Fig. 1: ein Ausführungsbeispiel für eine Anordnung zur kontinuierlichen Radmomentregelung eines batterieelektrischen Fahrzeugs mit Radnabenmaschinen und entkoppeltem Bremssystem in schematischer Darstellung mit Antriebsstrang, Bremssystem sowie einem integrierten Momentregelsystem (= Radmoment- und Radschlupfregelung),

Fig. 2: ein Blockdiagramm der Regelung für ein einzelnes Rad gemäß Fig. 1 im Bremsmodus,

Fig. 3: ein Blockdiagramm der Regelung für ein einzelnes Rad gemäß Fig. 1 im Fahrmodus und

Fig. 4: das Blockdiagramm zur Momentbegrenzung im Hinblick auf Einschränkungen und Momentverblendung während des Bremsmodus.

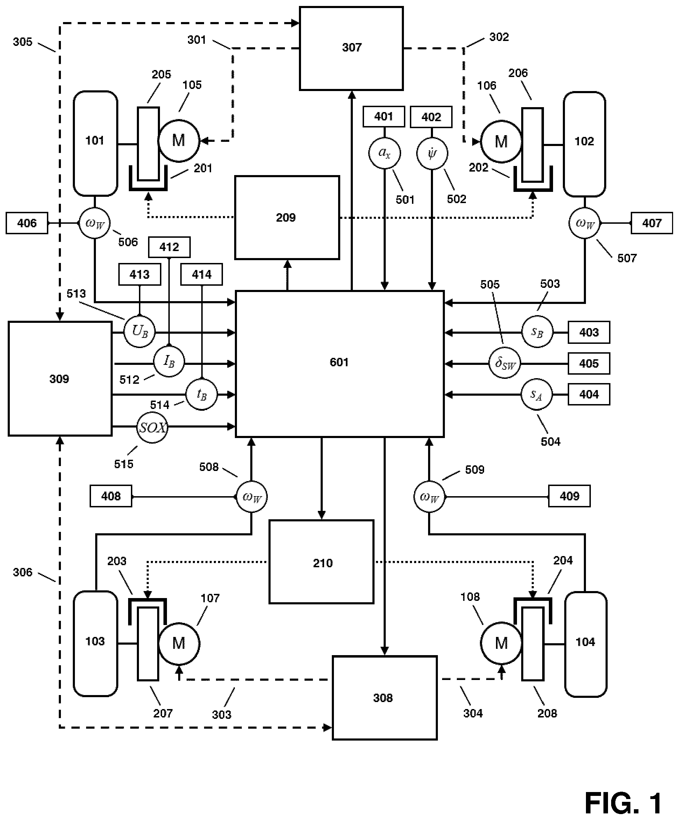

Die folgende Erläuterung eines Ausführungsbeispiels bezieht sich auf ein voll-/batterieelektrisches Fahrzeug mit entkoppeltem Bremssystem und getriebelosen Raddirektantrieben (Radnabenmaschinen, **105** bis **108**) an mindestens einer angetriebenen Achse und einer zugehörigen, integrierten Fahrwerksregelung zur optimalen Drehmomentverteilung, so wie in Fig. 1 schematisch dargestellt.

Das an jedem Rad (**101** bis **104**) anliegende Drehmoment wird durch eine integrierte Radschlupfregelung (**608**) mit implementierter Referenzschlupfschätzung (**607**) auf Basis der Fahrereingaben, dem Fahrmodus und äußeren Einflüssen, die durch zugehörige Sensoren (**401** bis **414**) erfasst werden, hinsichtlich des optimalen Radschlupfverhältnisses limitiert.

Im Fahrmodus wird das Drehmoment nur durch die elektrischen Maschinen (**105** bis **108**) bereitgestellt.

Im Bremsmodus kann das Drehmoment durch die elektrischen Maschinen, betrieben im Generatormodus, und den Reibbremsen bereitgestellt werden.

Dabei sind drei Optionen möglich, bei denen das Bremsmoment

(i) nur durch die elektrischen Maschinen (**105** bis **108**),
(ii) nur durch die Reibbremsen (**201** bis **208**), oder
(iii) durch den Mischbetrieb der elektrischen Maschinen und Reibbremsen bereitgestellt wird (kooperatives Bremsen).

Fig. 1 zeigt den Antriebsstrang und das Reibbremssystem eines batterieelektrischen Fahrzeugs, welches mit einem Momentenregelsystem [ = Raddrehmoment- und Radschlupfregelungseinheit] (**601**) ausgestattet ist, wobei dieses Momentenregelsystem (**601**) daten- sowie informationsleitend mit einer zentralen Fahrzeug-Steuergeräteinheit (nicht in der Figur dargestellt) verbunden ist.

Die elektrischen Maschinen (**105** bis **108**) an den Rädern (**101** bis **104**) sind mit den Einheiten der Leistungsmodule (**307** und **308**) verbunden, die an die Traktionsbatterie (**309**) angebunden sind. Alle Verbindungen sind mit Hochvoltkabeln (**301** bis **306**) ausgeführt. Abhängig von der Betriebsart wird elektrische Energie in Form eines Lade- oder Entladestroms (**512**) durch die elektrischen Maschinen (**105** bis **108**) an die Traktionsbatterie (**309**) abgeben (Bremsfall) oder aus dieser entnommen (Antriebsfall). Die Leistungsmodule (**307**, **308**) sind mit dem Momentregelsystem [ = Raddrehmoment- und Radschlupfregelungseinheit (**601**)] verbunden.

Im Antriebsfall, erhält das Momentregelsystem [= Raddrehmoment- und Radschlupfregelungseinheit (**601**)] die aktuelle Position des Gaspedals (**504**) vom Pedalwegsensor (**404**) und generiert ein zugehöriges Signal für die Realisierung des Antriebsmoments an den Rädern (**101** bis **104**). Da die elektrischen Maschinen (**105** bis **108**) während des Antreibens im Motorbereich arbeiten, wird der Traktionsbatterie (**309**) über einen Entladestrom (**512**) elektrische Energie entnommen.

Im Bremsfall, erhält das Momentregelsystem [= Raddrehmomenten- und Radschlupfregelungseinheit (**601**)] die aktuelle Position des Bremspedals (**503**) vom Pedalwegsensor (**403**) und generiert ein zugehöriges Signal für die Realisierung des Bremsmoments an den Rädern (**101** bis **104**). Da die elektrischen Maschinen (**105** bis **108**) während dem Bremsen in den Generatorbetrieb umschalten, wird die Traktionsbatterie (**309**) über einen Ladestrom (**512**) mit elektrischer Energie versorgt.

Neben den elektrischen Maschinen (**105** bis **108**), kann das Fahrzeug auch Reibbremsmoment nutzen. Der notwendige Anteil des Reibbremsmoments wird in dem Momentregelsystem [= Raddrehmomenten- und Radschlupfregelungseinheit] (**601**) erzeugt und zum Bremsensteuergerät an der Vorderachse (**209**) und dem Bremsensteuergerät an der Hinterachse (**210**) weitergeleitet. Diese Steuergeräte wandeln die Bremsmomentanfrage von dem Momentregelsystem [= Raddrehmoment- und Radschlupfregelungseinheit] (**601**) in zugehörige Stellsignale für die Bremsaktuatoren (**201** bis **204**) um, die eine Klemmkraft auf den Bremsscheiben (**205** bis **208**) erzeugen. All diese Teile sind Bestandteile des im Fahrzeug installierten Bremssystems. Abhängig von Parametern wie Bremsscheibendurchmesser, -temperatur, Reibungskoeffizient etc. werden diese Kräfte in zugehörige Reibbremsmomente an allen Rädern (**101** bis **104**) und separiert von den regenerativen Anteilen, die durch die elektrischen Maschinen (**105** bis **108**) realisiert werden, umgewandelt.

Neben den zuvor erwähnten Sensoren und Signalen verarbeitet das Momentregelsystem [= Raddrehmoment- und Radschlupfregelungseinheit (**601**)] auch die folgenden Signale.

Ein Winkelsensor (**405**) misst die Winkelverschiebung des Lenkrads aus seiner Ruhe-/Nulllage (**505**) für das Momentregelsystem [= Raddrehmomenten- und Radschlupfregelungseinheit] (**601**). Wird ein vorher definierter Schwellwert überschritten, stellt die Radschlupfregelung ihren Betrieb ein. Dies soll verhindern, dass während Kurvenfahrten das maximale Kraftschlusspotential zwischen Untergrund und Reifen nicht nur für die Längsdynamik genutzt wird, um die Lenkbarkeit des Fahrzeugs noch zu gewährleisten.

Ein Gierratensensor (**402**) generiert ein Signal über die Rotation des Fahrzeugsaufbaus um seine Hochachse (**502**) für das Momentregelsystem [= Raddrehmoment- und Radschlupfregelungseinheit (**601**). Sollte das Fahrzeug zum zu starken Gieren neigen, wird das Moment zur Schaffung eines Gegengiermoments umverteilt.

Die Signale der Radgeschwindigkeiten (**506** bis **509**) werden durch Drehzahlsensoren (**406** bis **409**) in den Naben der Räder (**101** bis **104**) gemessen und an das Momentregelsystem [= Raddrehmoment- und Radschlupfregelungseinheit (**601**)] weitergeleitet. Dieselben Informationen können aus der Änderung der Motorpositionssignale gewonnen werden. Dieses Signal wird von den integrierten Sensoren der elektrischen Maschinen (**105** bis **108**) bereitgestellt.

Integrierte Sensoren (**412** bis **414**) in der Traktionsbatterie (**309**) erfassen die Spannungen (**513**), deren Temparatur (**514**) und den Lade- bzw. Entladestrom (**512**). Die Signale dieser Sensoren (**412** bis **414**) werden intern verarbeitet und in Form des Batteriezustands (**515**) an das Momentregelsystem [= Raddrehmoment- und Radschlupfregelungseinheit (**601**)] weitergeleitet. Dieses Signal ist wichtig für i) die Zustandsüberwachung des Hochvoltsystems und ii) für die Begrenzung des maximalen, regenerativen Moments unter vorher definierten Bedingungen (z. B. voll aufgeladener Batterie). Normalerweise verfügen die elektrischen Maschinen (**105** bis **108**) über separate Temperatursensoren (nicht in FIG. 1 dargestellt), deren Signale in den Antriebssteuergeräten (**307**, **308**) ausgewertet werden. Wenn die Motortemperatur zu weit ansteigt, reduziert die interne Logik der Antriebssteuergeräte (**307**, **308**) das maximale, elektrische Moment.

Das Momentregelsystem [ = Raddrehmoment- und Radschlupfregelungseinheit (**601**)] stellt Funktionen wie Antiblockiersystem (ABS) und Traktionskontrolle (TC) bereit. Dafür wird der erforderliche Momentbedarf berechnet und an die Steuergeräte der Subkomponenten (**209**, **210**, **307**, **308**) weitergeleitet, wo die Umwandlung in Stellsignale erfolgt. Darüber hinaus überwacht das Momentregelsystem [ = Raddrehmoment- und Radschlupfregelungseinheit (**601**) den Fahrzeugzustand im Allgemeinen und die Zustände der elektrischen Maschinen (**105** bis **108**), der Reibbremsen (**201** bis **208**) und der Hochspannungskomponenten (**307**, **308** und **309**) im Einzelnen.

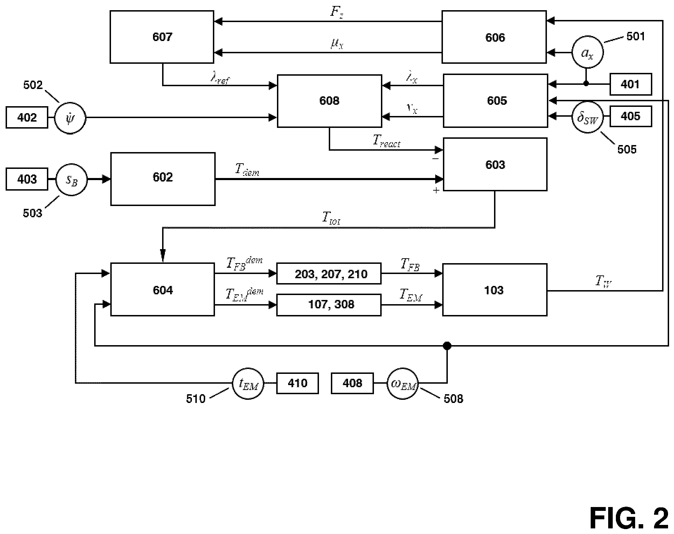

Fig. 2 zeigt das Regelschema im Bremsfall für ein einzelnes Rad (hier: Rad hinten links, **103**). Der Bremsfall wird über das Signal des Pedalwegsensors (**403**) ermittelt, welcher die aktuelle Position des Bremspedals (**503**) erfasst, um Informationen über die Pedalbetätigung bzw. den -weg zu bekommen. Der Block *Momentengenerator* (**602**) nutzt das Pedalpositionssignals (**503**) um den zugehörigen Gesamtmomentbedarf $T_{dem}$ zu bestimmen

$$T_{dem} = m_v \cdot a_x^{ref}(s_B) \cdot r_{dyn} \qquad \text{Gl. 1}$$

Der Gesamtmomentbedarf wird zum Block *Bremskraftverteilung* (**603**) weitergeleitet, wo in Abhängigkeit vom Vorderachsanteil f eine Aufteilung auf die vorderen (**101**, **102**) und hinteren Räder (**103**, **104**) erfolgt.

$$f_i \geq \frac{m_v \cdot a_x - F_{x,r}^{max}}{m_v \cdot a_x} = 1 + \mu_{x,max} \cdot \left( \frac{h}{L} - \frac{1}{z} \cdot \frac{l_f}{L} \right) \qquad \text{Gl. 2}$$

Zusätzlich wird der radindividuelle Momentbedarf mit einem Reaktivmoment ($T_{react}$) korrigiert, um den Gesamtmomentbedarf ($T_{tot}$) zu ermitteln. Dieses Reaktivmoment kommt vom *Radschlupfregler-Block* (**608**). Es soll garantieren, dass das Rad (hier: **103**) nicht blockiert (Bremsfall) oder durchdreht (Antriebsfall). Die reaktive Komponente wird gemäß folgender Gleichung berechnet, bei der $K_\lambda$ die Reglerverstärkung darstellt. Seine Struktur ist abhängig von der Regelungsart (z. B. PID).

$$T_{react} = K_\lambda \cdot (\lambda_{ref} - \lambda_{act}) \qquad \text{Gl. 3}$$

Der aktuelle Radschlupf ($\lambda_{act}$) kommt vom Block *Radschlupf- und Längsgeschwindigkeitsschätzer* (**605**). Die Längsgeschwindigkeit ($v_x$) wird aus dem Signal der Längsbeschleunigung (**401**) und Gierrate (**402**) des Fahrzeugaufbaus, den Radgeschwindigkeiten (**406** bis **409**) und dem Lenkwinkel ermittelt, wobei die ersten Signale von geeigneten Sensoren (**501**, **502**, **506** bis **509**) und das letzte Signal aus dem Lenkradwinkel (**405**) und dem Lenkübersetzungsverhältnis stammen. Der Radschlupf wird dann mit Gl. 4 berechnet. Die Größe $r_{dyn}$ beschreibt den dynamischer Halbmesser des Rades (hier: **103**), welcher vorrangig von Reifeneigenschaften, dem Fülldruck und Beladungszustand des Fahrzeugs abhängt.

$$\lambda_{act} = \begin{cases} \dfrac{v_x - \omega \cdot r_{dyn}}{\omega \cdot r_{dyn}}, & \text{Antriebsfall} \\[2mm] \dfrac{\omega \cdot r_{dyn} - v_x}{v_x}, & \text{Bremsfall} \end{cases} \qquad \text{Gl. 4}$$

Der Block *Referenzschlupfgenerator* (**606**) berechnet den Wert des Referenzschlupf ($\lambda_{ref}$) am Rad (hier: **103**), welcher von den Straßenbedingungen abhängt. Dafür bestimmt der *Radkräfte- und Reibwertschätzer* (**606**) den Betrag des Reibungskoeffizienten in Längsrichtung ($\mu_x$) und die vertikalen Radkräfte ($F_z$). Dafür werden die Signale der Längsbeschleunigung ($a_x$) und das Radmoment ($T_W$) herangezogen. Damit führt die integrierte Regelung eine kontinuierliche Anpassung an den Soll-Radschlupf durch, indem sie über das von der elektrischen Maschine (hier: **107**) oder den Reibungsbremsen (hier: **203**, **207**) auf das Rad (hier: **103**) ausgeübte Drehmoment nachstellt.

Im Block *Momentenverblendung und -limitierung* (**604**) errechnet die Regelung das, in Abhängigkeit verschiedener Beschränkungen der elektrischen Maschine (hier: **103**) und der Traktionsbatterie (**309**) maximale zur Verblendung bereitstehende Drehmoment ($T_{EM}^{dem}$). Dafür werden die Beschränkungen im Verblendungsfaktor ($\alpha \in [0,1]$) berücksichtigt, dessen Wert über die Aufteilung der Momente entscheidet.

$$T_{dem} = \begin{cases} T_{EM}^{dem} = \mathrm{sat}_0^{T_{EM}^{max}}(\alpha \cdot T_{tot}) \\ T_{FB}^{dem} = T_{tot} - T_{EM}^{dem} \end{cases} \qquad \text{Gl. 5}$$

Die Regelung stellt sicher, dass die elektrische Maschine (hier: **107**) nur bis zur Sättigung genutzt wird, d. h. das angeforderte, regenerative Moment dem maximal zur Verfügung stehenden Motormoment entspricht. Der Rest wird über die Reibbremse (hier: **207**, **208**) realisiert und anschließend auf das Rad (hier: **103**) übertragen.

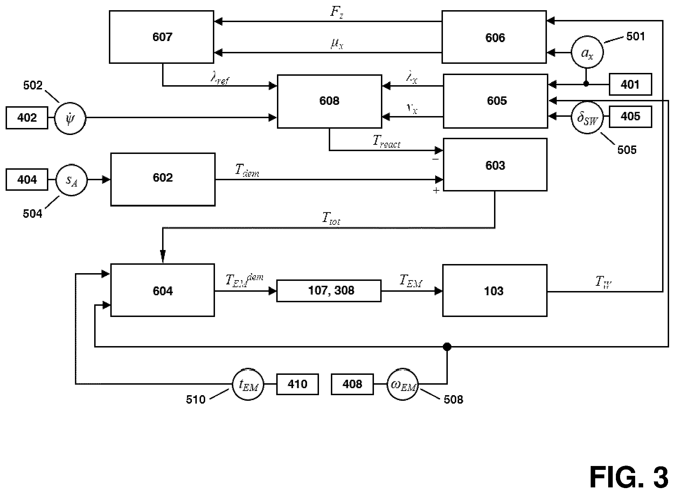

Fig. 3 zeigt das Regelschema für den Antriebsfall für ein einzelnes Rad (hier: Rad hinten links, **103**). Der Antriebsfall wird über das Signal des Pedalwegsensors (**404**) ermittelt, welcher die aktuelle Position des Gaspedals (**504**) erfasst. Abhängig vom Signal der Gaspedalstellung (**503**) wird im Block *Momentgenerator* (**602**) der zugehörigen Momentbedarf ($T_{dem}$) bestimmt.

Die nachfolgenden Funktionen sind identisch zum Bremsfall in Fig. 2. Einziger Unterschied ist, dass im Antriebsfall das Moment im Block *Momentverblendung und -limitierung* (**604**) nicht auf die elektrische Maschine (hier: **107**) und Reibbremse (hier: **207**, **208**) aufgeteilt wird, die Limitierungsfunktion allerdings erhalten bleibt, bevor der Momentbedarf an die elektrische Maschine (hier: **103**) weitergegeben wird.

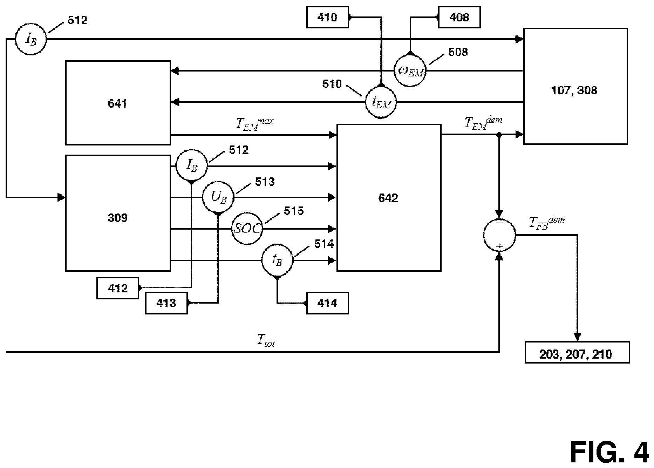

Fig. 4 zeigt das Regelschema der *Momentverblendung und -limitierung* (**604**). Hauptaugenmerk liegt auf einer Maximierung der Energierückgewinnung während des Bremsens und einer hochdynamischen Aktuierung während ABS-Bremsungen. Darüber hinaus sollen Beschränkungen seitens der elektrischen Maschine (hier: **107**) und der Traktionsbatterie (**309**) berücksichtigt werden. Diese Beschränkungen hängen vom aktuellen Batteriezustand (SOX, **515**), welcher hauptsächlich von der maximalen Ladestromstärke ($I_B$, **512**), den Zellspannungen ($U_B$, **513**) und der Batterietemperatur ($t_B$, **514**) abhängt, und zweitens werden die momentane Winkelgeschwindigkeit ($\omega_{EM}$, **508**) und Motortemperatur ($t_{EM}$) berücksichtigt. Dies wird im sogenannten *Verblendungsfaktor* ($\alpha \in [0,1]$) zusammengefasst, welcher genutzt wird, um das maximal erreichbare, regenerative Drehmoment ($T_{EM}^{dem} = T_{EM}^{max}$) zu berechnen und an die Leistungselektronik [hier: Bremssteuergerät (**210**)] weiterzuleiten, die die elektrischen Stellgrößen für die elektrische Maschine (hier: **107**) generiert. Die Differenz zwischen dem gesamten Momentbedarf ($T_{tot}$) und dem maximal verfügbaren, regenerativen Drehmoment ($T_{EM}^{max}$) wird dann als Reibmomentbedarf ($T_{FB}^{dem}$) an das Bremsensteuergerät (**210**) weitergegen, welches die Stellsignale zur Ansteuerung der Bremssättel (hier: **203**) zur Erzeugung der Klemmkraft mit der Bremsscheibe (hier: **207**) generiert. Über die Übertragung dieser Momente an das Rad (hier: **103**), entsteht aus der Wechselwirkung zwischen Reifen und Untergrund das tatsächliche Radmoment ($T_W$).

Alle in der Beschreibung, den Ausführungsbeispielen und den nachfolgenden Ansprüchen dargestellten Merkmale können sowohl einzeln als auch in beliebiger Kombination miteinander erfindungswesentlich sein.

<u>Bezugszeichenliste</u>

101 - Rad, vorn links
102 - Rad, vorn rechts
103 - Rad, hinten links
104 - Rad, hinten rechts
105 - elektrische Maschine / Radnabenmaschine, vorn links
106 - elektrische Maschine / Radnabenmaschine, vorn rechts
107 - elektrische Maschine / Radnabenmaschine, hinten links
108 - elektrische Maschinen / Radnabenmaschine, hinten rechts
201 - Bremsaktuator/ Bremssattel der Reibbremse, vorn links
202 - Bremsaktuator/ Bremssattel der Reibbremse, vorn rechts
203 - Bremsaktuator/ Bremssattel der Reibbremse, hinten links
204 - Bremsaktuator/ Bremssattel der Reibbremse
205 - Bremsscheibe der Reibbremse, vorn links
206 - Bremsscheibe der Reibbremse, vorn rechts
207 - Bremsscheibe der Reibbremse, hinten links
208 - Bremsscheibe der Reibbremse, hinten rechts
209 - Bremsensteuergerät an der Vorderachse

210 - Bremsensteuergerät an der Hinterachse
301 - Hochvoltkabel
302 - Hochvoltkabel
303 - Hochvoltkabel
304 - Hochvoltkabel
305 - Hochvoltkabel
306 - Hochvoltkabel
307 - Leistungsmodul mit zugehörigem Antriebssteuergerät an der Vorderachse
308 - Leistungsmodul mit zugehörigem Antriebssteuergerät an der Hintersachse
309 - Traktionsbatterie
401 - Sensor (Längsbeschleunigung)
402 - Sensor (Gierrate)
403 - Sensor ( Pedalwegsensor am Bremspedal)
404 - Sensor (Pedalwegsensor am Antriebspedal)
405 - Sensor (Lenkradwinkel)
406 - Drehzahlsensor (Radgeschwindigkeit Rad, vorn links)
407 - Drehzahlsensor (Radgeschwindigkeit Rad, vorn rechts)
408 - Drehzahlsensor (Radgeschwindigkeit Rad, hinten links)
409 - Drehzahlsensor (Radgeschwindigkeit Rad, hinten rechts)
410 - Temperatursensor (Temperatur elektrische Maschine / Radnabenmaschine, hinten links)
412 - integrierter Sensor (Lade-/Entladestromstärke der Traktionsbatterie)
413 - integrierter Sensor (Spannung der Traktions batterie)
414 - integrierter Sensor (Temperatur der Traktionsbatterie)
501 - integrierter Sensor (Lade- und Entladestromstärke)
502 - Rotation des Fahrzeugs um seine Hochachse, Gierrate
503 - Position des Bremspedals
504 - Position des Gaspedals /Antriebspedals
505 - Ruhe- / Nulllage des Lenkrads
506 - momentane Winkelgeschwindigkeit Rad, vorn links
507 - momentane Winkelgeschwindigkeit Rad, vorn rechts
508 - momentane Winkelgeschwindigkeit Rad, hinten links
509 - momentane Winkelgeschwindigkeit Rad, hinten rechts
515 - Temperatur elektrische Maschine, Radnabenmaschine
512 - Lade- oder Endladestrom (-stromstärke)
513 - Zellspannungen
514 - Temperatur Traktionsbatterie
515 - Batteriezustand
601 - Momentregelsystem (Raddrehmoment- und Radschlupfregelungseinheit)
602 - Momentgenerator
604 - Momentlimitierung (Momentverblendung)
605 - Radschlupf- und Längsgeschwindigkeitsschätzer
606 - Referenzschlupfgenerator / Radkräfte- und Reibwertschätzer
607 - implementierte Referenzschlupfschätzung
608 - integrierte Radschlupfregelung

**Patentansprüche**

1.  Anordnung zur kontinuierlichen Radmomentregelung eines batterieelektrischen Fahrzeugs mit Radnabenmaschinen und entkoppeltem Bremssystem umfassend

    • eine zentrale Fahrzeug-Steuergeräteinheit zur Steuerung und Regelung sowie zur Verarbeitung von Daten,
    • ein entkoppeltes Bremssystem mit einem Bremspedal und mindestens einem Bremsensteuergerät, welche daten- und informationsleitend miteinander verbunden sind, wobei das Bremssystem einzelne Reibbremsen an jedem Rad des Fahrzeugs in Form von Bremsscheiben sowie Bremssätteln beinhaltet, welche eine Klemmkraft auf die Bremsscheiben ausüben, wenn sie mittels des Bremspedals und des Bremsensteuergeräts aktuiert werden und wobei das Bremsensteuergerät die Bremssättel als Aktuatoren an jedem Rad einzeln und das Bremssystem im Ganzen steuert sowie regelt und dabei zur kooperativen Bremssteuerung daten- und informationsleitend mit der Fahrzeug-Steuergeräteinheit verbunden ist,
• eine Vorrichtung an dem Bremspedal zur Simulation eines Pedalgefühls beim Bedienen dessen,
• eine Batterie, welche elektrische Energie vorhält,
• elektrische Maschinen mit einem Gaspedal und mindestens einem Antriebssteuergerät, welche daten- und informationsleitend miteinander verbunden sind, radindividuell angesteuert und ohne Getriebe mit den Rädern als Radnabenantrieb verbunden sind und

- ein Antriebsmoment erzeugen, wenn sie mit elektrischer Energie aus der Batterie versorgt werden oder
- ein Bremsmoment erzeugen, während sie im Generatormodus betrieben werden und elektrische Energie aus kinetischer Energie zurückgewinnen, um die Batterie aufzuladen,

• Leistungselektronikmodule, welche

- im Antriebsfall den Gleichstrom aus der Batterie in Wechselstrom zur Versorgung der elektrischen Maschinen umwandelt
oder
- im Bremsfall den während des regenerativen Bremsens entstehenden Wechselstrom in Gleichstrom zum Laden der Batterie umwandelt, um diese zu laden,

• reale Sensoren zur Messung von Fahrzeuglängsbeschleunigung, Radgeschwindigkeiten, Pedalposition, Fahrzeuggierrate, Lenkradwinkel, Ladezustand der Batterie, Stromstärke der Batterie, Temperatur der Traktionsbatterie, Winkelgeschwindigkeit der elektrischen Maschinen und Temperatur der elektrischen Maschinen, welche mit der zentralen Fahrzeug-Steuergeräteinheit verbunden sind,
• virtueller Sensoren, erzeugt durch mindestens einen Algorithmus in der zentralen Fahrzeug-Steuergeräteinheit zur Detektion von weiteren Signalen bezüglich der Fahrzeuglängsgeschwindigkeit, der Längskräfte an den Reifen, der Vertikalkräfte an den Reifen, der Fahrzeuggesamtmasse und der Fahrbahnsteigungswinkel, **dadurch gekennzeichnet, dass** die Anordnung ein integriertes Momentregelsystem umfasst, welches über

- eine Steuer- und Regeleinheit zur Generierung eines Gesamtantriebsmoments und eines Gesamtbremsmoments in Abhängigkeit des Fahrerwunsches,
- eine Steuer- und Regeleinheit zur Generierung des optimalen Radschlupfs und Momentanpassung für jedes Rad und
- eine Steuer- und Regeleinheit zur Momentverblendung und

- verteilung, welche die Gesamtmomentanfrage für jedes Rad und die zugehörigen Stellsignale für die elektrischen Maschinen und Bremssättel generiert,

verfügt und daten- sowie informationsleitend mit der zentralen Fahrzeug-Steuergeräteinheit verbunden ist, wobei das Momentregelsystem mit

- einem Modul zur Beschränkung der Aktuatoren, welches, basierend auf den Informationen über die Drehzahl, Motortemperatur, Motorstromstärke und Motorzustand, die oberen und unteren Grenzen für die elektrischen Maschinen bestimmt,
- einem Modul zur Beschränkung der Aktuatoren, welches, basierend auf den Informationen über die maximale Klemmkraft und die maximale Betätigungsgeschwindigkeit, die oberen und unteren Grenzen für die Reibbremsen bestimmt und
- einem Modul zur Beschränkung der Batterie, welches, basierend auf Informationen über den Ladezustand, die Lade-/Entladestromstärke, die Batteriespannung und die Batterietemperatur, die oberen und untere Grenzen für die Batterie bestimmt,

daten- und informationsleitend verbunden ist und das Radmoment regelt, wobei das an jedem Rad anliegende Drehmoment durch das Momentregelsystem mit implementierter Referenzschlupfschätzung auf Basis von Fahrereingaben, einem ausgewählten Fahrmodus und äußeren, von den Sensoren erfassten Einflüssen hinsichtlich des optimalen Radschlupfverhältnisses limitiert wird.

2. Anordnung gemäß Anspruch 1, **dadurch gekennzeichnet, dass** mittels Algorithmen und basierend auf

- einem gemessenen Pedalweg des Antriebspedals oder des Bremspedals,

- einer gemessenen Längsbeschleunigung des Fahrzeugaufbaus,
- einer gemessenen Fahrzeugmasse und
- einem gemessenen Steigungswinkel

die notwendige Größe des Antriebsmoments oder Bremsmoments ermittelt und an das Momentregelsystem übergeben wird, welches das Radmoment über die elektrischen Maschinen und das Bremssystem antreibend oder bremsend regelt.

3. Anordnung gemäß Anspruch 1 oder 2, **dadurch gekennzeichnet, dass**

• das Momentregelsystem eine Raddrehmomenten- und Radschlupfregelungseinheit (601) ist,
• das Antriebssteuergerät und die Leistungselektronik ein gemeinsames Leistungsmodul (307) zur Steuerung der elektrischen Maschinen (105 und 106) an den Vorderrädern (101 und 102) und ein gemeinsames Leistungsmodul (308) zur Steuerung der elektrischen Maschinen (107 und 108) an den Hinterrädern (103 und 104) ausbilden, wobei die Maschinen (105, 106, 107 und 108) dem Antrieb und Bremsen des Fahrzeugs dienen,
• das entkoppelte Bremssystem ein Bremsensteuergerät (209) für die Vorderräder (101 und 102) und ein Bremsensteuergerät (210) für die Hinterräder (103 und 104) umfasst, welches jeweils die Stellsignale für die Klemmkraft der Bremssättel als Bremsaktuatoren (201, 202, 203 und 204) an den Bremsscheiben (205, 206, 207 und 208) erzeugen, wobei der zu kooperativen Bremsen notwendige Anteil des Reibungsmoments in der Raddrehmomenten- und Radschlupfregelungseinheit (601) erzeugt und zu den Bremsensteuergeräten (209 und 210) weitergeleitet wird und die Bremsensteuergeräte (209 und 210) die Bremsmomentanfrage von der Raddrehmoment- und Radschlupfregelungseinheit (601) in zugehörige Stellsignale für die Bremsaktuatoren (201, 202, 203 und 204) umwandelt,
• die Traktionsbatterie eine Hochspannungs-Traktionsbatterie (309) ist,
• das Gaspedal ein Antriebspedal (504) mit einem Pedalwegsensor (404) ist, welcher die aktuelle Position des Antriebspedals (504) an die Raddrehmoment- und Radschlupfregelungseinheit (601) weitergibt, wobei das Antriebspedal (504) ein zugehöriges Signal für die Realisierung des Antriebsmoments an den Rädern (101, 102, 103 und 104) gibt,
• das Bremspedal ein Bremspedal (503) mit einem Pedalwegsensor (403) ist, welcher die aktuelle Position des Bremspedal (503) an die Raddrehmomenten- und Radschlupfregelungseinheit (601) weitergibt, wobei das Bremspedal (503) ein zugehöriges Signal für die Realisierung des Bremsmoments an den Rädern (101, 102, 103 und 104) gibt,
• die realen Sensoren

  - ein Winkelsensor (405) zur Messung der Winkelverschiebung des Lenkrads aus seiner Ruhe-/Nulllage (505) für die Raddrehmomenten- und Radschlupfregelungseinheit (601),
  - ein Gierratensensor (402) zum Generieren eines Signals über die Rotation des Fahrzeugs um seine Hochachse (502) für die Raddrehmomenten- und Radschlupfregelungseinheit (601),
  - Drehzahlsensoren (406, 407, 408 und 409) zum Erfassen der Umdrehung der Räder (101, 102, 103 und 104), welche an die Raddrehmoment- und Radschlupfregelungseinheit (601) weitergeleitet wird,
  - sowie integrierte Sensoren (412, 413 und 414) zur Erfassung der Spannung (513), der Stromstärke (514) und des Lade- und Entladestromes (515) als Zustand der Traktionsbatterie (309), welcher an die Raddrehmoment- und Radschlupfregelungseinheit (601) weitergeleitet wird,

sind, wobei

• die elektrischen Maschinen (105, 106, 107 und 108) mit der Leistungselektronik (307) und der Leistungselektronik (308) verbunden sind, welche an die Traktionsbatterie (309) angebunden sind, wobei alle Verbindungen Hochvoltkabel (301, 302, 303, 304, 305 und 306) sind,
• die Leistungselektronik (307) und die Leistungselektronik (308) mit Raddrehmoment- und Radschlupfregelungseinheit (601) verbunden sind,
und
• die Raddrehmoment- und Radschlupfregelungseinheit (601) sämtliche Signale dieser und die Signale sämtlicher Sensoren verarbeitet,

wobei

• im Antriebsfall die Raddrehmoment- und Radschlupfregelungseinheit (601) die aktuelle Position des Antriebspedals (504) vom Pedalwegsensor (404) erhält und ein zugehöriges Signal für die Realisierung des Antriebsmoments an den Rädern (101, 102, 103 und 104) generiert, wobei Entladestrom (512) durch die elektrischen Maschinen (105, 106, 107 und 108) aus der Traktionsbatterie (309) entnommen wird, und

• im Bremsfall die Raddrehmoment- und Radschlupfregelungseinheit (601) die aktuelle Position des Bremspedals (503) vom Pedalwegsensor (403) erhält und ein zugehöriges Signal für die Realisierung des Bremsmoments an den Rädern (101, 102, 103 und 104) generiert, wobei die elektrischen Maschinen (105, 106, 107 und 108) während dem Bremsen in den Generatorbetreib umschalten und den erzeugten Ladestrom (512) in die Traktionsbatterie (309) abgeben,

wobei die Raddrehmoment- und Radschlupfregelungseinheit (601) den Fahrzeugzustand im Allgemeinen und die Zustände der elektrischen Maschinen (105 bis 108), der Reibbremsen (201 bis 208) und der Traktionsbatterie (309) und der Leistungsmodule (307 und 308) im Einzelnen überwacht.

4. Anordnung gemäß Anspruch 3, **dadurch gekennzeichnet, dass** die Raddrehmoment- und Radschlupfregelungseinheit (601) Funktionen in Form des Antiblockiersystems und der Traktionskontrolle bereitstellt, wobei der dafür erforderliche Momentbedarf berechnet wird und an die Bremsensteuergeräte (209 und 210) und die Leistungsmodule (307 und 308) weitergeleitet, wo die Umwandlung in Stellsignale erfolgt.

5. Verfahren zur kontinuierlichen Radmomentregelung eines batterieelektrischen Fahrzeugs mit Radnabenmaschinen und entkoppeltem Bremssystem unter Verwendung der Anordnung gemäß Anspruch 1, 2, 3 oder 4, bei dem

• das Modul zur Beschränkung der Aktuatoren, welches, basierend auf den Informationen über die Drehzahl, Motortemperatur, Motorstromstärke und Motorzustand, die oberen und unteren Grenzen für die elektrischen Maschinen bestimmt,
• das Modul zur Beschränkung der Aktuatoren, welches, basierend auf den Informationen über die maximale Klemmkraft und die maximale Betätigungsgeschwindigkeit, die oberen und unteren Grenzen für die Reibbremsen bestimmt und
• das Modul zur Beschränkung der Traktionsbatterie, welches, basierend auf Informationen über den Ladezustand, die Lade-/Entladestromstärke, die Batteriespannung und die Batterietemperatur, die oberen und untere Grenzen für die Traktionsbatterie bestimmt,
mittels Algorithmen und basierend auf

- einem gemessenen Pedalweg des Antriebspedals (504) oder des Bremspedals (503),
- einer gemessenen Längsbeschleunigung des Fahrzeugaufbaus,
- einer gemessenen Fahrzeugmasse, und
- einem gemessenen Steigungswinkel

die notwendige Größe des Antriebsmoments oder Bremsmoments ermitteln und an die zentrale Fahrzeugs-Steuergeräteinheit (601) übergeben, welche das Radmoment regelt.

6. Verfahren gemäß Anspruch 5, **dadurch gekennzeichnet, dass** die zentrale Fahrzeugs-Steuergeräteinheit (601) zur Generierung des optimalen Radschlupfs mittels

• eines Algorithmus, der das aktuelle Radschlupfverhältnis an jedem Rad (101, 102, 103 und 104) bestimmt, basierend auf

- einem gemessenen Längsgeschwindigkeitssignal jedes Rades (101, 102, 103 und 104), und
- einer gemessenen Längsgeschwindigkeit des Fahrzeugaufbaus,

• eines Algorithmus, der das Referenzschlupfverhältnis an jedem Rad (101, 102, 103 und 104) bestimmt, basierend auf

- einer gemessenen Längsbeschleunigung des Fahrzeugaufbaus;
- einer gemessenen Längskraft an jedem Rad (101, 102, 103 und 104), und
- einer gemessenen Vertikalkraft an jedem Rad (101, 102, 103 und 104),

• eines Algorithmus, der die Differenz zwischen dem aktuellen und dem Referenzschlupfverhältnis für jedes Rad (101, 102, 103 und 104) bestimmt, sowie

• eines Algorithmus, der das Raddrehmoment gemäß dem optimalen Radschlupfverhältnis für jedes Rad (101, 102, 103 und 104) anpasst, basierend auf

- einer gemessenen Winkeländerung am Lenkrad und
- einer gemessenen Gierrate des Fahrzeugaufbaus

Daten generiert, die an die Bremsensteuergeräte (209 und 210) und die Leistungsmodule (307 und 308) übergeben werden, welche das Radmoment über die elektrischen Maschinen (105, 106, 107 und 108) und das Bremssystem (201 bis 208) antreibend oder bremsend regelt.

7. Verfahren gemäß Anspruch 5 oder 6, **dadurch gekennzeichnet, dass** die zentrale Fahrzeug-Steuergeräteinheit in Abstimmung mit der Raddrehmoment- und Radschlupfregelungseinheit (601) Daten mittels

• eines Algorithmus, der den maximalen Anteil des regenerativen Bremsmoments bestimmt, basierend auf

- einer gemessenen Verschiebung des Bremspedals,
- Aktuatorbeschränkungen der elektrischen Maschinen (105, 106, 107 und 108) und des Bremssystems sowie
- Beschränkungen der Traktionsbatterie (309),
und

• eines Algorithmus, der das gesamte Raddrehmoment in den Anteil an regenerativem Moment für die elektrischen Maschinen (105, 106, 107 und 108) und das reine Reibbremsmoment für die Reibbremsen (201 bis 208) aufteilt, verarbeitet und mit den verarbeiteten Daten das Radmoment über die elektrischen Maschinen und das Bremssystem antreibend oder bremsend regelt.

8. Verfahren gemäß Anspruch 5, 6 oder 7, **dadurch gekennzeichnet, dass** die Raddrehmoment- und Radschlupfregelungseinheit (601) im Antriebsfall die aktuelle Position des Gaspedals (504) vom Pedalwegsensor (404) erhält und ein zugehöriges Signal für die Realisierung des Antriebsmoments an den Rädern (101 bis 104) generiert.

9. Verfahren gemäß Anspruch 5, 6 oder 7, **dadurch gekennzeichnet, dass** die Raddrehmoment- und Radschlupfregelungseinheit (601) im Bremsfall die aktuelle Position des Bremspedals (503) vom Pedalwegsensor (403) erhält und ein zugehöriges Signal für die Realisierung des Bremsmoments an den Rädern (101 bis 104) generiert, wobei die elektrischen Maschinen (105 bis 108) während dem Bremsen in den Generatorbetrieb umschalten, so dass die Traktionsbatterie (309) über einen Ladestrom (512) mit elektrischer Energie versorgt wird.

10. Verfahren gemäß Anspruch 8, **dadurch gekennzeichnet, dass** in Antriebsfall

• für mindestens eines der vier Räder (101, 102, 103 und 104) über das Signal des Pedalwegsensors (404) ermittelt wird, wie die aktuelle Position des Gaspedals (504) ist, wobei in Abhängig vom Signal der Gaspedalstellung (503) in einem Momentgenerator (602) der zugehörigen Momentbedarf bestimmt wird,
• der Momentgenerator (602) das Pedalpositionssignal (503) nutzt, um den zugehörigen Gesamtmomentbedarf zu bestimmen, wobei in Abhängigkeit vom Vorderachsanteil eine Aufteilung auf die vorderen Räder (101, 102) und hinteren Räder (103, 104) erfolgt,
• zusätzlich der radindividuelle Momentbedarf mit einem Reaktivmoment korrigiert wird, um den Gesamtmomentbedarf zu ermitteln, wobei dieses Reaktivmoment vom Radschlupfregler (608) übermittelt wird,
• der aktuelle Radschlupf von einem Radschlupf- und Längsgeschwindigkeitsschätzer (605) übermittelt wird und
• die Längsgeschwindigkeit aus dem Signal der Längsbeschleunigung (401) und Gierrate (402) des Fahrzeugaufbaus, den Radgeschwindigkeiten (406 bis 409) und dem Lenkwinkel ermittelt wird, wobei die ersten Signale von den Sensoren (501, 502, 506 bis 509) und das letzte Signal aus dem Lenkradwinkel (405) und dem Lenkübersetzungsverhältnis stammen,
wobei der Referenzschlupfgenerator (606) den Wert des Referenzschlupfs am Rad ermittelt, indem ein Radkräfte- und Reibwertschätzer (607) den Betrag des Reibungskoeffizienten in Längsrichtung und die vertikalen Radkräfte bestimmt, wofür die Signale der Längsbeschleunigung und das Radmoment herangezogen werden, und
die Momentverblendung und -limitierung (604) in Abhängigkeit verschiedener Beschränkungen der elektrischen Maschinen (105, 106, 107 und 108) und der Traktionsbatterie (309) maximale zur Verblendung bereitstehende Drehmoment ermittelt und regelt, in dem die Beschränkungen im Verblendungsfaktor ($\alpha$) berücksichtigt werden, dessen Wert über die Aufteilung der Momente entscheidet.

**11.** Verfahren gemäß Anspruch 9, **dadurch gekennzeichnet, dass** im Bremsfall

- für mindestens eines der Räder (101, 102, 103 und 104) über das Signal des Pedalwegsensors (403) ermittelt wird, welcher die aktuelle Position des Bremspedals (503) erfasst, um Informationen über die Pedalbetätigung bzw. den -weg zu erhalten,
- der Momentgenerator (602) das Pedalpositionssignals (503) nutzt, um den zugehörigen Gesamtmomentbedarf zu bestimmen,
- der Gesamtmomentbedarf zur Bremskraftverteilung (603) weitergeleitet wird, wo in Abhängigkeit vom Vorderachsanteil eine Aufteilung auf die vorderen Räder (101, 102) und hinteren Räder (103, 104) erfolgt,
- zusätzlich der radindividuelle Momentbedarf mit einem Reaktivmoment korrigiert wird, um den Gesamtmomentbedarf zu ermitteln, wobei dieses Reaktivmoment vom Radschlupfregler (608) übermittelt wird,
- der aktuelle Radschlupf von einem Radschlupf- und Längsgeschwindigkeitsschätzer (605) übermittelt wird und
- die Längsgeschwindigkeit aus dem Signal der Längsbeschleunigung (401) und Gierrate (402) des Fahrzeugaufbaus, den Radgeschwindigkeiten (406 bis 409) und dem Lenkwinkel ermittelt wird, wobei die ersten Signale von den Sensoren (501, 502, 506 bis 509) und das letzte Signal aus dem Lenkradwinkel (405) und dem Lenkübersetzungsverhältnis stammen,

wobei der Referenzschlupfgenerator (606) den Wert des Referenzschlupfs am Rad ermittelt, indem ein Radkräfte- und Reibwertschätzer (607) den Betrag des Reibungskoeffizienten in Längsrichtung und die vertikalen Radkräfte bestimmt, wofür die Signale der Längsbeschleunigung und das Radmoment herangezogen werden, und

die Momentverblendung und -limitierung (604) in Abhängigkeit verschiedener Beschränkungen der elektrischen Maschinen (105, 106, 107 und 108) und der Traktionsbatterie (309) maximale zur Verblendung bereitstehende Drehmoment ermittelt und regelt, in dem die Beschränkungen im Verblendungsfaktor ($\alpha$) berücksichtigt werden, dessen Wert über die Aufteilung der Momente entscheidet,

damit eine kontinuierliche Anpassung an den Soll-Radschlupf erfolgt, indem sie über das von mindestens einer der elektrischen Maschinen (105, 106, 107 und 107) oder den Reibungsbremsen (201 bis 208) auf mindestens eines der Räder (101, 102, 103 und 104) ausgeübte Drehmoment nachgestellt wird, und

um zu garantieren, dass

- ein Rad oder die Räder (101, 102, 103 und 104) nicht im Bremsfall blockieren oder im Antriebsfall durchdrehen und
- die elektrische Maschinen (105, 106, 107 und 108) nur bis zur Sättigung genutzt wird, in dem das angeforderte, regenerative Moment dem maximal zur Verfügung stehenden Motormoment entspricht, wobei der Rest des Bremsens über die Reibbremsen (201 bis 208) realisiert und dabei auf die Räder (101, 102, 103 und 104) übertragen wird.

**12.** Verfahren gemäß Anspruch 10 oder 11, **dadurch gekennzeichnet, dass** die Momentenverblendung und -limitierung (604) einen Verblendungsfaktor ($\alpha$) nutzt, um das maximal erreichbare, regenerative Drehmoment zu berechnen und an das Leistungsmodul (308) weiterzuleiten, welches die elektrischen Stellgrößen für die elektrische Maschine (107) generiert, wobei die Differenz zwischen dem gesamten Momentenbedarf und dem maximal verfügbaren, regenerativen Drehmoment als Reibmomentenbedarf an das Bremsensteuergerät (210) weitergegeben wird, welches die Stellsignale zur Ansteuerung des Bremssattels (203) zur Erzeugung der Klemmkraft mit der Bremsscheibe (207) generiert, um

- die Maximierung der Energierückgewinnung während des Bremsens,
- eine hochdynamische Aktuierung während ABS-Bremsungen sowie
- eine Berücksichtigung der Beschränkungen seitens der elektrischen Maschinen (105, 106, 107 und 108) und der Traktionsbatterie (309) zu bewirken, welche

- vom aktuellen Batteriezustand (515), welcher wiederum von der maximalen Ladestromstärke (512), den Zellspannungen (513) und der Batterietemperatur (514),
- der momentanen Winkelgeschwindigkeit (508) und
- Motortemperatur abhängt.

**FIG. 1**

FIG. 2

FIG. 3

FIG. 4

Europäisches
Patentamt

European
Patent Office

Office européen
des brevets

# EUROPÄISCHER RECHERCHENBERICHT

**Nummer der Anmeldung**

**EP 22 21 2840**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | DE 10 2016 003628 A1 (TECHNISCHE UNIVERSITÄT ILMENAU [DE]) 28. September 2017 (2017-09-28) * Absätze [0001], [0005], [0011], [0023], [0024], [0026], [0035], [0038] * * Abbildungen 1, 2 * * Anspruch 5 * ----- | 1-12 | INV. B60L3/12 B60L7/22 B60L15/38 B60L58/13 B60L7/24 B60L3/10 B60L15/20 B60T8/176 |
| Y | WO 2013/080335 A1 (PIONEER CORP [JP]; KATO MASAHIRO [JP]) 6. Juni 2013 (2013-06-06) * Seite 9, Absatz 1 * * Seite 14, Absatz 5 * * Seite 16, Absatz 4 * ----- | 1-12 | |
| A | DE 198 42 472 B4 (TOYOTA MOTOR CO LTD [JP]; ADVICS CO [JP]) 24. Mai 2012 (2012-05-24) * Absätze [0073], [0074], [0078], [0079], [0082] * * Abbildung 1 * ----- | 1-12 | |

**RECHERCHIERTE SACHGEBIETE (IPC)**

B60L
B60T

Der vorliegende Recherchenbericht wurde für alle Patentansprüche erstellt

| Recherchenort | Abschlußdatum der Recherche | Prüfer |
|---|---|---|
| Den Haag | 11. Juni 2023 | Wirth, Sebastian |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 22 21 2840

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-06-2023

| Im Recherchenbericht angeführtes Patentdokument | Datum der Veröffentlichung | Mitglied(er) der Patentfamilie | Datum der Veröffentlichung |
|---|---|---|---|
| DE 102016003628 A1 | 28-09-2017 | KEINE | |
| WO 2013080335 A1 | 06-06-2013 | JP 5822946 B2 | 25-11-2015 |
| | | JP WO2013080335 A1 | 27-04-2015 |
| | | WO 2013080335 A1 | 06-06-2013 |
| DE 19842472 B4 | 24-05-2012 | DE 19842472 A1 | 25-03-1999 |
| | | JP 3442266 B2 | 02-09-2003 |
| | | JP H1178839 A | 23-03-1999 |
| | | US 6231134 B1 | 15-05-2001 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20150019058 A1
- DE 102011016246 A1
- US 9527484 B2
- JP 2004104991 A
- US 9744862 B2
- DE 102014003992 A1
- EP 2760714 B1
- US 8152245 B2
- US 9321356 B2